# EUROPEAN PATENT SPECIFICATION

(11) **EP 4 251 551 B1**
(45) Date of publication and mention of the grant of the patent: **23.10.2024**
(21) Application number: 21815488.8
(22) Date of filing: 19.11.2021
(51) Int. Cl.: B65H 57/00, B65H 57/14, B65H 57/16, B29D 30/38

(54) **SYSTEM FOR DRAWING AND TRANSFERRING WIRES AND METHOD OF USE**
SYSTEM ZUM ZIEHEN UND ÜBERTRAGEN VON DRÄHTEN UND VERFAHREN ZUR VERWENDUNG
SYSTÈME DE TIRAGE ET DE TRANSFERT DE FILS ET PROCÉDÉ D'UTILISATION

(30) Priority: 26.11.2020 FR 2012160
(43) Date of publication of application: 04.10.2023
(73) Proprietor: COMPAGNIE GENERALE DES ETABLISSEMENTS MICHELIN, 63000 Clermont-Ferrand (FR)
(72) Inventor: JEGO, Laurent, 63040 CLERMONT-FERRAND CEDEX 9 (FR); TREMBLIER, Jérôme, 63040 CLERMONT-FERRAND CEDEX 9 (FR)
(74) Representative: M.F.P. Michelin
(86) International application number: PCT/EP2021/082240
(87) International publication number: WO 2022/112108

(56) References cited:
- EP-A1- 3 369 543
- US-A- 5 810 271

## Description

### Technical Field

The invention relates to a system for drawing and transferring wires that allows the direct and uninterrupted transfer of the roller panels through which wires selected for drawing are arranged in one or more racks of the system. The invention also relates to a method for drawing and transferring wires selected for incorporation in a reinforced ply without loss of alignment of the wires.

### Context

In the field of tires, it is required that the tire exhibit various performance aspects (for example, low rolling resistance, better wear resistance, comparable grip under dry and wet conditions, sufficient mileage, etc.). Therefore, tires are made up of reinforced rubber plies (or "reinforced plies") having different types of rubber mixtures with reinforcing wires or strips integrated in the rubber material. The nature of the wire and the nature of the rubber are selected depending on the desired final characteristics. As used herein, the term "wire" includes, without limitation, reinforcing elements (or "reinforcements") that are metallic (such as wires, films, or steel cords), synthetic, textile or hybrid.

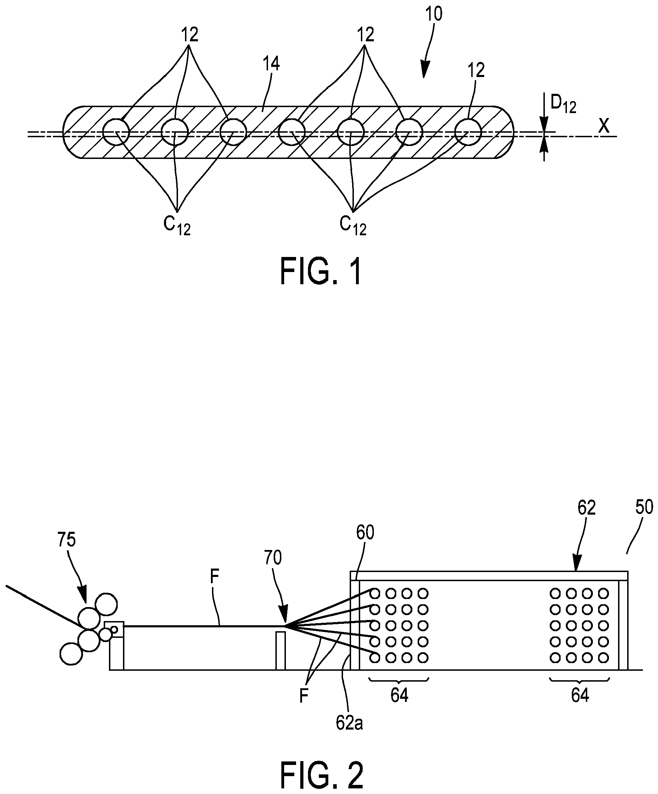

In order to produce reinforced rubber plies, it is known to calender the metal reinforcements between two layers of unvulcanized rubber to produce reinforced rubber plies. By way of example, as can be seen in Figure 1, a reinforced rubber ply 10 includes a plurality of continuous metallic wires 12 having a common geometry. The wires 12 are laid parallel to one another and extend longitudinally between opposite ends of a rubber layer 14. After calendering, the wires 12 must be spaced uniformly with respect to one another and they must also be positioned uniformly in such a way that a centre C₁₂ of each wire remains collinear along a defined longitudinal axis X through the thickness of the rubber layer 14. Preferably, the longitudinal and vertical alignment of the wires 12 is ensured in such a way that a maximum tolerance for a displacement D₁₂, measured between each wire centre C₁₂ and the longitudinal axis X of the rubber layer 14, does not exceed a predetermined tolerance for the particular rubber layer when assembled (they are "aligned" and in "alignment"). The resulting plies are cut to the desired size and assembled to form a green tire.

In order to supply green tire manufacturing machines (such as calendering machines that form a calendering line), known creel systems support a plurality of reels held in uniform rows, each reel supporting a material wound into a filament (or "wire"). Referring to Figure 2, a calendering line 50 incorporates a known creel system 60 that uses one or more racks 62. Each rack 62 supports a plurality of reels 64 that are rotatably mounted and held in uniform rows and uniform columns. Each reel 64 supports a wire F with predetermined properties, and each reel is associated with a tension device. During a method for drawing wires, each wire F is carried from the reels 64 towards an outlet 62a of the rack. The wires F could be transferred from the outlet 62a of the rack 62 towards a preparation zone 70 that is disposed at any point along a path between the outlet 62a and one or more downstream machines that perform one or more calendering processes (for example, calendering machines intended to apply an elastomer to a known substrate, or "calendering machines"). The wires F can be applied to a rubber layer so that they are aligned parallel to one another with a predetermined density (for example, at a guiding and holding installation 75 of the calendering line 50).

In order to obtain a good-quality ply, it is necessary to guide and hold a plurality of wires that supply rubber products. Each rack has two faces accommodating an equal number of reel winders (for example, between 400 and 2000), organized in a plurality of levels and columns. These racks can be positioned, depending on the circumstances, either one above the other (or "superposed configuration") or next to one another (or "parallel configuration"). In order to be able to prepare a reinforced ply with the desired width and pitch, the wires coming from each reel are drawn in order to bring them to the end of the rack (for example, to a preparation zone). Typically, at the front of each horizontal row of reels is a frontal plate with eyelets, a grooved roller, or a front roller panel through which the wires are organized before being delivered to the calender. A front roller panel (or "panel" or "roller board") has a series of fixed horizontal rollers placed in front of a series of fixed vertical rollers that form window openings at the intersection of the spaces between the adjacent vertical and horizontal rollers. When the wiring of the roller panel is complete, all the wires can be drawn such that the roller panel organizes the wires with a prescribed uniform tension in a compact zone of predetermined width before the entry into one or more downstream machines that perform one or more calendering processes. Several embodiments of roller panels are known (for example, see the patents US5,810,271 and KR100771681B1).

Roller panels are generally elements that are fixed relative to the rack and situated at the end thereof in the output zone of the wires. In the context of a manual operation, one or more operators must pass the wires through the roller panels and attach them (for example, on holding combs or on other equivalent holding means). Thus, the drawing of the wires entails a large number of back-and-forth movements in order to bring the hundreds of wires necessary for the manufacture of a reinforced ply.

The disclosed invention therefore improves the drawing of wires from one face of the rack without having to perform back-and-forth movements along the latter. Even for racks of great height, the disclosed system for drawing and transferring wires ensures the precise alignment of each wire so as to deliver it to the one or more downstream calendering machines with a uniform and specific tension corresponding to the properties of the drawn wire.

### Summary of the invention

The invention relates to a system for drawing and transferring wires arranged in one or more racks of the system, each rack supporting a plurality of reels held in uniform rows and uniform columns along a predetermined length, and each reel supporting a wire that is conveyed towards an outlet of the rack during a method for drawing and transferring wires performed by the system, characterized in that the system includes:
- a mobile structure having a frame, a base and one or more mobile means that allow the mobile structure to be moved along the length of the rack, the frame including:
- upper and lower supports that are substantially parallel and spaced apart by a predetermined distance allowing the loading of the roller panels in correspondence with the wires exiting the reels of the rack; and
- one or more holding means that are substantially parallel and spaced apart by a predetermined distance in correspondence with roller panels loaded on the frame, each holding means having a holding and alignment means for guiding the wires passing through from a corresponding roller panel towards one or more installations downstream of the system;
- one or more roller panels made up of horizontal and vertical rollers that allow the wires to be organized relative to the reels; and
- a fixed structure disposed at the end of the rack and having a frame and a base, the frame of the fixed structure including upper and lower supports that are substantially parallel and spaced apart by a predetermined distance allowing the transfer of the roller panels from the frame of the mobile structure towards the fixed structure without loss of alignment of the wires, wherein the mobile structure is positioned next to the fixed structure.

In one embodiment of the system, the frame of the mobile structure includes a chassis in which the roller panels are disposed in a substantially parallel manner, the chassis having a sliding element that is transferable between the upper and lower supports of the frame and the upper and lower supports of the fixed structure that are spaced apart by a predetermined distance corresponding to the parameters of the chassis.

In one embodiment of the system, the frame of the mobile structure includes one or more rails that are substantially parallel and spaced apart by a predetermined distance allowing the loading of the roller panels on the frame.

In one embodiment of the system, the holding means includes a comb having a support with a predetermined length and an upper surface from which a plurality of sets of teeth extend that are aligned and parallel and that are positioned with a predetermined pitch.

In one embodiment of the system, the frame includes one or more forks at which wires selected for drawing are deflected during the drawing and transfer method, the forks being fastened to the frame in an adjustable manner along an elongate member of the frame depending on the positioning of the roller panels.

In one embodiment of the system, the mobile means of the mobile structure is selected from one or more wheels provided on at least one of the frame and the base of the mobile structure, one or more manually guided modules and one or more autonomous modules.

The invention also relates to a method for drawing and transferring wires selected for incorporation in a reinforced ply performed by the system of the invention during a calendering cycle, the method including the following steps:
- a step of positioning the mobile structure such that it moves in a mobile manner relative to a path substantially parallel to the rack, during which the roller panels necessary for placing the selected wires are put in place in the frame;
- a step of capturing the wires selected for incorporation in a reinforced ply, during the capture of the selected wires in the one or more roller panels where they are organized so as to perform their drawing;
- a holding and alignment step performed by the holding means of the mobile structure, during which each selected wire is captured on a corresponding holding means;
- a step of conveying the captured wires towards the outlet of the rack, during which the mobile means of the mobile structure moves along the path substantially parallel to the rack so as to draw the captured wires;
- a step of drawing the conveyed wires towards the fixed structure, during which the movement of the mobile structure ends so as to align the upper and lower supports of the frame and the upper and lower supports of the fixed structure; and
- a step of transferring the roller panels from the frame of the mobile structure towards the fixed structure so as to make it easier to load the roller panels into the fixed structure.

In one embodiment of the method, the step of taking hold of the selected wires includes a step of stopping the mobile structure at one or more columns of the rack so as to capture the selected wires.

In one embodiment of the method, the step of positioning the mobile structure includes a step of aligning the roller panels with a corresponding row of the rack from which wires are selected for incorporation in a reinforced ply.

The invention further relates to a calendering line that carries out a calendering cycle so as to form reinforced plies, including the system of the invention.

Further aspects of the invention will become obvious from the following detailed description.

### Brief description of the drawings

The nature and various advantages of the invention will become more obvious from reading the following detailed description, in conjunction with the attached drawings, throughout which the same reference numerals denote parts that are identical, and in which:
**[****Figure 1]** Figure 1 shows a side view in section of a known reinforced rubber ply.
**[****Figure 2]** Figure 2 shows a schematic side view of an embodiment of a calendering line incorporating a known creel system.
**[****Figure 3]** Figure 3 shows a perspective view of an embodiment of a system for drawing and transferring wires of the invention.
**[****Figure 4]** Figure 4 shows a perspective view of a mobile structure of the drawing and transfer system of Figure 3.
**[****Figure 5]** Figure 5 shows a perspective view of a fixed structure of the drawing and transfer system of Figure 3.
**[****Figure 6****] [****Figure 7****]** Figures 6 and 7 show perspective views of the system of Figure 3 during an embodiment of a method for drawing and transferring wires of the invention that is performed by the system.
**[****Figure 8]** Figure 8 shows a perspective view with roller panels installed in line with reels of the rack at the end of the method of the invention.

### Detailed description

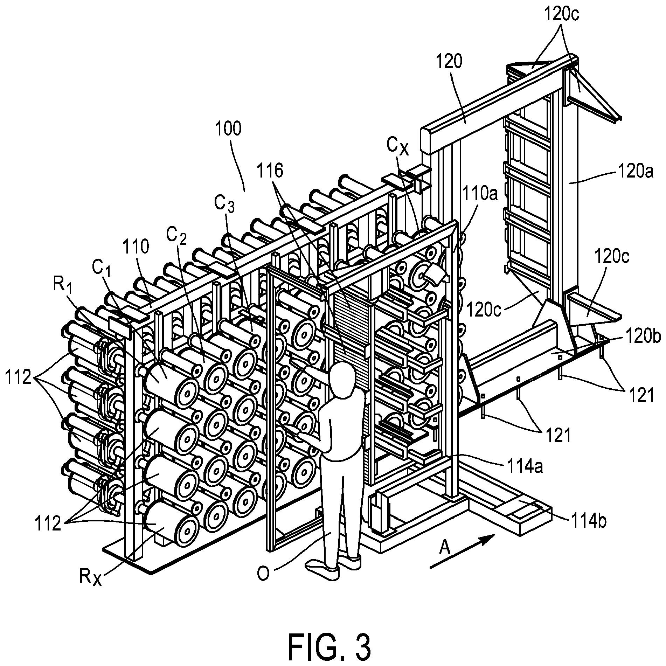

Referring now to the figures, in which the same numerals identify the same elements, one embodiment of a system for drawing and transferring wires (or "system") 100 of the invention is shown in Figure 3. The system 100 is used with one or more supply racks (or "racks") 110.

The system 100, together with the one or more racks 110, can form part of a calendering line (such as the calendering line 50 shown in Figure 2) that carries out a calendering cycle so as to form reinforced plies having different types of rubber mixtures with reinforcing wires integrated in the rubber material. Examples of suitable wires include, without limitation, wires made from micro-alloyed carbon steel (0.9% carbon and 0.2% chromium) of UHT type having a breaking strength (Rm) of the order of 3650 MPa (breaking force of 258 N) and a total elongation at break (At) of 2.3% (Rm and At being measured under tension in accordance with ISO standard 15 6892 of 1984). Each wire may be any arbitrary individual steel reinforcement that has a cross-sectional dimension (either diameter or thickness) greater than 100 µm. The metallic wires may have any suitable arbitrary cross-sectional geometry (for example, of the type shown in Figure 1).

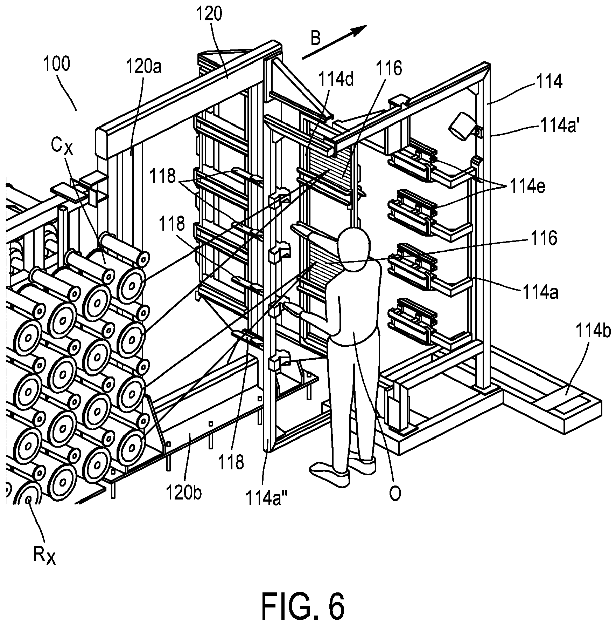

The system 100 is used with one or more racks 110. As explained above in relation to the rack 62 in Figure 2, each rack 110 supports a plurality of reels 112 in a rotary manner. The reels 112 are held in uniform rows Rx and uniform columns Cx (where X varies from 1 to N), and each reel 112 supports a wire with predetermined properties. During a method for drawing wires of the invention (described below), each wire is carried from the reels 112 towards an outlet 110a of the rack (see Figures 6, 7 and 8). The wires could be transferred from the outlet 110a of the rack 110 towards a preparation zone (not shown) that is disposed at any point along a path between the outlet 110a and one or more downstream installations for carrying out one or more calendering processes. The wires can be applied to a rubber layer so that they are aligned parallel to one another with a predetermined density (for example, at a guiding and holding installation of the calendering line). The rack 110 is selected from commercially available supply racks.

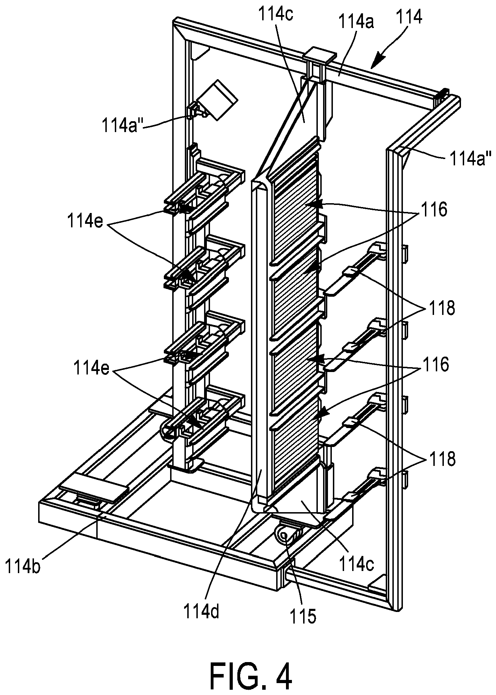

Referring again to Figure 3 and also to Figure 4, the system 100 includes a mobile structure 114 that is set in motion during a method for drawing and transferring wires performed by the system 100. The mobile structure 114 includes a frame 114a that is supported by a base 114b. It is understood that the frame 114a and the base 114b can be provided either as a single integrated piece or as two or more detachable pieces. In the case where the frame 114a and the base 114b have detachable pieces, the two pieces can be adjustable relative to the parameters of the rack 110 (including its length, its height and the number of rows and columns incorporated in the rack). In one embodiment of the system 100, the frame 114a of the mobile structure 114 remains mobile, and the base 114b remains disposed next to a fixed structure disposed at the end of the rack 110 (described above).

At least one of the frame 114a and the base 114b includes one or more mobile means that allow the mobile structure 114 to be moved along the length of the rack 110. The mobile structure 114 is therefore able to move from column to column of the rack 110 so as to draw the wires in the subsequent columns. In one embodiment, the movement of the mobile structure 114 relative to the ground (and therefore the corresponding drawing of the wires carried by the reels 112) is established via one or more wheels 115 (or their equivalents) provided on the base 114b (and/or on a part of the frame 114a that is in contact with the ground) (see Figure 4). In one embodiment of the mobile structure 114, the movement of the mobile structure 114 relative to the ground is established via a module that moves in a mobile manner relative to a path substantially parallel to the rack 110 (for example, a module moved by one or more motors, a manually guided module, an autonomous module, etc.). Such a module can replace or accompany the wheels 115. It is understood that other equivalent mobile means can be used.

The frame 114a also includes one or more roller panels (or "panels") 116 of the type described above. The roller panels 116 are made up of horizontal and vertical rollers that allow the wires to be organized relative to the reels 112, serving to guide and hold each wire in a desired position for the organization of the reinforced ply being produced. The selected roller panels 116 are of the type of panels that are commercially available.

The positioning of the roller panels 116 is adjustable along the upper and lower supports 114c that are substantially parallel and spaced apart by a predetermined distance corresponding to the parameters of the panels (including their length, their width and their collective height). The upper and lower supports 114c make it easier to load the roller panels 116 in correspondence with the wires leaving the reels 112 of the rack 110, therefore allowing the transfer of the roller panels 116 by the mobile structure 114 during a method for drawing and transferring wires. By way of example, the rack 110 shown in Figures 3 and 6 to 8 includes four rows R of reels 112. There are therefore four roller panels 116 arranged on the upper and lower supports 114c of the frame 114a.

In one embodiment of the system 100, the roller panels 116 are disposed in a substantially parallel manner in a chassis 114d of the frame 114a. The chassis 114d has a sliding element that is held by the upper and lower supports 114c during the setting in motion of the mobile structure 114. At the end of the movement, when the mobile structure 114 reaches a fixed structure (described below), the chassis 114d slides (either manually or automatically) such that the chassis transfers the panels 116 (and therefore the wires conveyed thereby) from the frame 114a towards the fixed structure. The fixed structure retains the chassis 114d, and therefore the transferred panels 116, without loss of alignment of the wires.

It is understood that other embodiments can use equivalent means to hold and transfer the roller panels 116. For example, the chassis 114d can be replaced by one or more rails that are substantially parallel and spaced apart allowing the insertion of a predetermined number of panels between the upper and lower supports 114c. At the time of the transfer, the panels can be transferred one by one from the frame 114a towards a fixed structure having corresponding rails.

Referring again to Figures 3 and 4, the frame 114a of the mobile structure 114 also includes one or more holding means 114e corresponding to one or more roller panels 116. The holding means 114e are substantially parallel and spaced apart by a predetermined distance in correspondence with the roller panels 116. The positioning of the holding means 114e is adjustable along an elongate member 114a' of the frame 114a depending on the positioning of the roller panels 116. By way of example, the rack 110 shown in Figures 3 and 6 to 8 has four roller panels 116 arranged in the frame 114a. There are therefore four holding means 114e arranged on the elongate member 114a' of the frame 114a (but it is understood that a holding means can be used with two or more panels).

Each holding means 114e has a holding and alignment means for guiding the wires passing through from a corresponding roller panel 116 towards one or more downstream installations. In one embodiment of the mobile structure 114 (shown in Figure 4), the holding means 114e includes a comb (for example, a rubber comb) having a support with a predetermined length and an upper surface from which extends a plurality of sets of teeth. The sets of teeth are aligned and parallel, and they are positioned with a predetermined pitch. In another embodiment of the mobile structure 114 (not shown), the holding means 114e includes one or more clamps that, in a closed position, retain the wires during methods for drawing and transferring wires performed by the system 100. It is understood that the holding means 114e can be selected from other known holding and alignment means.

In one embodiment of the mobile structure 114, the frame 114a also includes one or more wire deflection forks (or "forks") 118 that are fastened to the frame 114a. The positioning of the forks 118 is adjustable along an elongate member 114a" of the frame 114a depending on the positioning of the panels 116. By way of example, the rack 110 shown in Figures 3 and 6 to 8 includes four roller panels 116 arranged in the frame 114a. There are therefore four forks 118 arranged on the elongate member 114a" of the frame 114a (but it is understood that a fork can be used with two or more panels).

The fork 118 includes a substantially horizontal piece that can be a folding piece so as to capture the one or more deflected wires. The function of the forks 118 is to deflect the selected wires and ensure their alignment during the conveyance of the wires from the reels 112 towards the panels 116. It is understood that each fork 118 can be provided either as a piece integrated with the frame 114a or as a detachable piece (for example, in kits incorporating combinations of forks and corresponding roller panels).

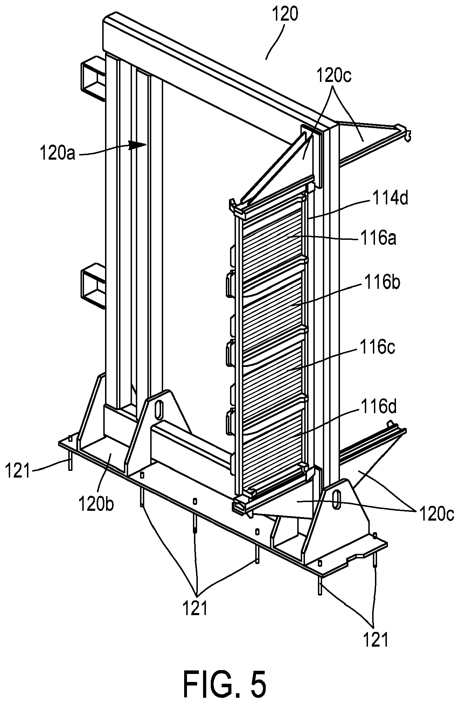

Referring again to Figures 3 and 4, and also to Figures 5 and 6, the system 100 also includes a fixed structure 120 that is disposed at the end of the rack 110 (see Figure 6). The fixed structure 120 includes a frame 120a that is supported by a base 120b secured to the ground by one or more known means (for example, screws 121). It is understood that the frame 120a and the base 120b can be provided either as a single integrated piece or as two or more detachable pieces. In the case in which the frame 120a and the base 120b have detachable pieces, the two pieces can be adjustable relative to the parameters of the rack 110 and of the mobile structure 114.

The frame 120a of the fixed structure 120 includes upper and lower supports 120c that make it easier to transfer the roller panels 116 from the frame 114a of the mobile structure towards the fixed structure 120 during a method for drawing and transferring wires. The upper and lower supports 120c are substantially parallel and spaced apart by a predetermined distance corresponding to the parameters of the panels 116. In the embodiments of the system 100 incorporating the chassis 114d, the upper and lower supports 120c are substantially parallel and spaced apart by a predetermined distance corresponding to the parameters of the chassis 114d. The chassis 114d can be transferred in a sliding manner along the upper and lower supports 114c of the frame 114a of the mobile structure and along the upper and lower supports 120c of the fixed structure 120.

In the embodiments of the system 100 incorporating rails that allow the panels 116 to be inserted in the frame 114a, the fixed structure 120 can include corresponding rails between the upper and lower supports 120c. In these embodiments, the panels can be transferred one by one from the frame 114a towards the fixed structure 120. By way of example, Figure 5 shows the fixed structure 120 having all the roller panels 116 already transferred (as performed at the end of the drawing and transfer method of the invention). It is understood that the roller panels can be transferred depending on the column of reels 112 involved in drawing wires. For example, if the wires of the reels of the rows R₁ and R₃ are to be drawn (see Figure 3), the roller panels 116a and 116c are transferred (it is not necessary to load either the mobile structure 114 or the fixed structure 120 with the roller panels 116b and 116d) (see Figure 5). If the wires of the reels of the rows R₂ are drawn (see Figure 3), only the panel 116b is transferred (it is not necessary to load either the mobile structure 114 or the fixed structure 120 with the roller panels 116a, 116c and 116d) (see Figure 5).

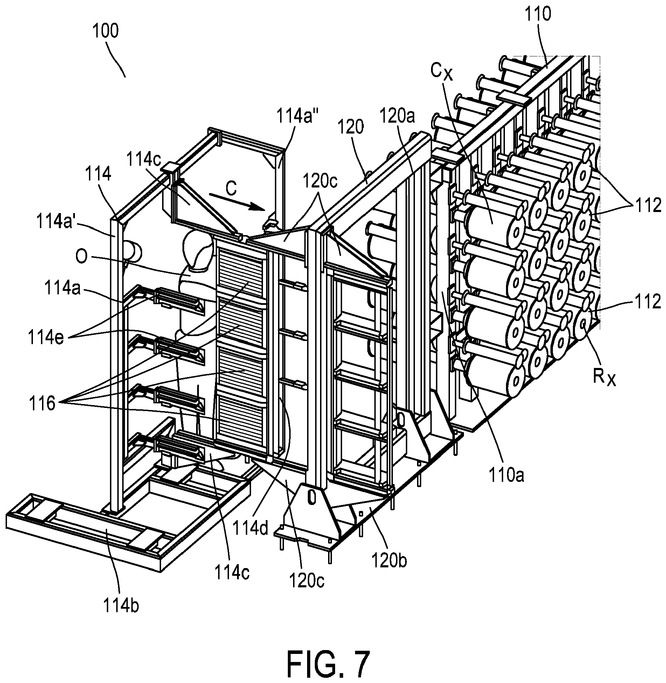

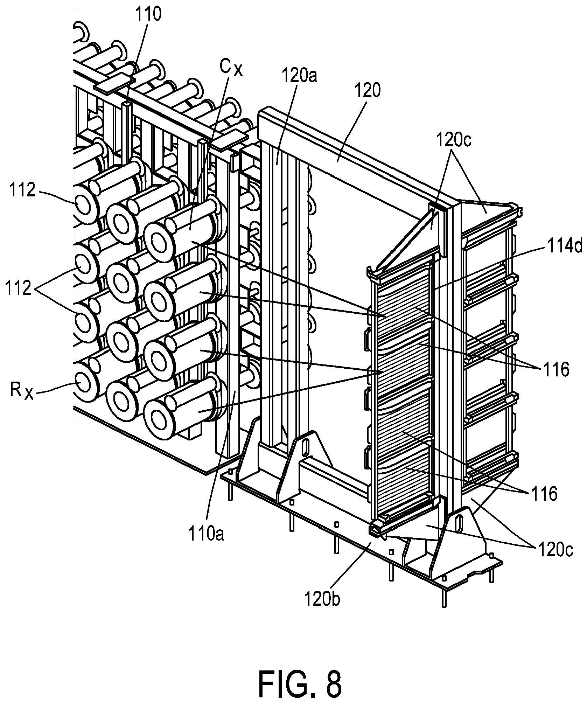

Thus, in all the embodiments of the system 100, the fixed structure 120 allows the direct and uninterrupted transfer of the roller panels 116 without loss of alignment of the wires. Referring again to Figures 3 to 6 and also to Figures 7 and 8, a detailed description is given, by way of example, of a method for drawing and transferring wires (or "method") of the invention that is performed by the system 100. Such a method for drawing and transferring wires can be performed during a calendering cycle performed by an installation for producing tires in which the system 100 is installed (for example, a calendering line). Of course, the method can be adapted easily for all the embodiments of the system 100.

At the start of a method for drawing and transferring wires of the invention, the method includes a step of positioning the mobile structure 114 so that it can move in a mobile manner relative to a path substantially parallel to the rack 110 (see Figure 3). This step includes a step of aligning the roller panels 116 with a corresponding row Rx (where X varies from 1 to N) of the rack 110 from which wires are selected for incorporation in a reinforced ply. In the embodiment of the system 100 that is shown, it is possible to select one or more wires coming from one or more columns Cx of reels 112. By way of example, in the embodiment of the system 100 that is shown in Figures 3 and 6 to 8, it is possible to select up to four wires in each column Cx of the rack 110 depending on the desired properties of the reinforced ply being produced.

During the step of positioning the mobile structure 114, the one or more roller panels 116 necessary for drawing the selected wires are put in place in the frame 114a (by loading the rails). In the embodiments of the system 100 incorporating the chassis 114d, the chassis arranged together with the panels 116 that are already arranged along the upper and lower supports 114c. In the embodiments of the system 100 incorporating rails, one or more dedicated spaces for loading roller panels can be used. It is understood that one or more roller panels might not be used during the current method (but they remain on standby for use in the methods in which the corresponding wires are selected).

The method for drawing and transferring wires also includes a step of capturing the wires selected for incorporation in a reinforced ply. This step includes capturing the selected wires in the one or more corresponding roller panels 116. In the embodiments of the system 100 incorporating the forks 118, this step includes a step of capturing the selected wires in the corresponding forks 118. The captured wires are then put in the corresponding roller panels 116 where they are held so as to perform their drawing.

The step of capturing the selected wires also includes a holding and alignment step performed by the holding means 114e of the mobile structure 114. During this step, each selected wire is captured on a corresponding holding means 114e so as to ensure the alignment of the wire throughout the duration of the method. In the embodiments of the system 100 in which the holding means 114e includes combs, each selected wire is captured on a corresponding comb so as to keep the wires at a predetermined pitch.

In one embodiment of the method, this step includes a step of stopping the mobile structure 114 at one or more columns Cx of the rack 110 so as to capture the selected wires. By way of example, the mobile structure 114 can start its movement at the column C₁' of the rack 110, and it can stop at one or more columns Cx on its path towards the outlet 110a of the rack. During each stop, the wires of one or more reels 112 of the column at which the structure stops are fastened to the corresponding roller panels 116 of the frame 114a. Programming can specify the intended stops of the mobile structure 114 depending on the desired properties of the tire being produced. In one embodiment of the method, indices can be integrated in the ground where the mobile structure 114 is automatically stopped.

The method for drawing and transferring wires also includes a step of conveying the captured wires from a selected column of reels Cx towards the outlet 110a of the rack (see the arrow A in Figure 3). During this step, the one or more mobile means (for example, wheels 115 or their equivalents) move the mobile structure along the path substantially parallel to the rack 110 so as to convey, and therefore draw, the captured wires. In the embodiment of the system 100 that is shown in Figure 3, the wires are conveyed from a column C₁ of the rack 110 towards the outlet 110a of the rack. Of course, the conveying of the wires can start from any column depending on the desired properties of the reinforced ply being produced. The mobile structure 114 can be moved towards the outlet 110a of the rack 110 manually by one or more operators O (see Figures 3 and 6 to 8). The movement of the mobile structure 114 towards the outlet 110a can be performed by a command from the one or more operators O (either onsite or remotely via a network connected to the system 100).

The method for drawing and transferring wires also includes a step of drawing the conveyed wires towards the fixed structure 120 (see the arrow B in Figure 6). During this step, the movement of the mobile structure ends in order to align the upper and lower supports 114c of the frame 114a and the upper and lower supports 120c of the fixed structure 120. In the embodiments of the system 100 in which the frame 114a remains mobile, and the base 114b remains disposed next to the fixed structure, the base 114b receives the frame 114a so as to align the upper and lower supports 114c, 120c as soon as the frame arrives at the fixed structure 120. In all the embodiments of the system 100, a braking means can be integrated with the frame 114a so as to prevent its movement.

The method for drawing and transferring wires includes a final step of transferring the roller panels 116 from the frame 114a of the mobile structure 114 towards the fixed structure 120 (see the arrow C in Figure 7). During this step, the roller panels slide along the upper and lower supports 114c of the frame 114a towards the upper and lower supports 120c of the fixed structure 120. In the embodiments of the system 100 incorporating the chassis 114d, the chassis slides between the two pairs of upper and lower supports 114c, 120c such that the chassis transfers the panels 116, and therefore the wires conveyed thereby, from the frame 114a towards the fixed structure. In the embodiments of the system 100 incorporating rails allowing the insertion of the panels 116, the panels are transferred one by one from the frame 114a towards the fixed structure 120 during this step. The fixed structure 120 can have corresponding rails in which the transferred panels are arranged with their captured wires.

In all embodiments of the system 100, the captured wires remain captured on the holding means 114e (and also on the forks 118 in the embodiments incorporating the forks). Thus, the captured wires remain in alignment at a desired tension from the start of the method until the roller panels 116 have been completely transferred.

The method for drawing and transferring wires of the invention can form part of a calendering cycle that also includes a step of introducing the wires at one or more installations downstream of the system 100 (including one or more preparation zones) so as to perform one or more calendering processes. In one embodiment of a calendering cycle, this step includes a step of introducing the wires at one or more rubber layers already deposited on a working surface awaiting production of a reinforced ply (for example, on a calender roll of a calendering line in which the system 100 is installed). At the end of the calendering cycle, one or more plies can be produced, and these can serve, for example, as carcass ply or crown ply intended to reinforce a crown of a tire, below the tread.

The systems for drawing and transferring wires of the invention are characterized by the fact of being able to draw a plurality of wires at the same time in an ergonomic manner. The disclosed drawing and transfer solutions make it possible to propose racks of great height (for example, having four rows or more), therefore reducing the footprint of the calendering line on the ground. The corresponding reduction in the length of the rack correspondingly increases productivity at the same time as reducing the cost of the calendering line. In addition, the operators no longer go back and forth along the rack to recover the wires.

For all embodiments of the system for drawing wires of the invention, a method for drawing wires of the invention (and also a cycle of the calendering method of which the method forms part) can be controlled by PLC and can include pre-programming and gestion information. For example, a method setting can be defined by using the properties of the wires and the parameters of the racks and the reels (including the number of rows and columns).

For all embodiments of the system for drawing and transferring wires of the invention, a monitoring system could be put in place. At least one part of the monitoring system may be supplied in a portable device such as a mobile network device (for example, a mobile telephone, a laptop computer, one or more portable devices connected to the network (including "augmented reality" and/or "virtual reality" devices, portable clothing connected to the network and/or any combinations and/or any equivalents)).

In certain embodiments, a system 100 (and/or a calendering line incorporating such a system) may receive voice commands or other audio data representing, for example, the current state of the method for drawing wires that is in progress compared with the intended state. The response can be generated in an audible, visual, tactile (for example by way of a haptic interface) and/or virtual and/or augmented manner.

In an embodiment, the method may include a step of training the system 100 (and/or training a calendering line that incorporates such system) to recognize representative characteristics of the wires leaving a corresponding rack (for example, diameter and tensile strength values) and to compare them with target values. This step may include a step of training the system 100 to recognize a lack of equivalence between the compared values. Each training step includes a classification generated by self-learning means. This classification can include, without limitation, the properties of the materials of the wires used, the intended parameters of the reinforced plies, the parameters of the mobile structure 114 and fixed structure 120, the durations of the calendering cycles and the values expected at the end of a cycle in progress (for example, the value of the space between the aligned wires in a reinforced ply, etc.). Each system 100 is designed to process a variety of wires intended for use in a variety of rubber mixtures without reducing industrial productivity.

The terms "at least one" and "one or more" are used interchangeably. The ranges given as lying "between a and b" encompass the values "a" and "b".

Although particular embodiments of the disclosed apparatus have been illustrated and described, it will be appreciated that various changes, additions and modifications can be made without departing from the scope of the invention, which is defined by the appended claims.

## Claims

1. A system (100) for drawing and transferring wires arranged in one or more racks (110) of the system, each rack (110) supporting a plurality of reels (112) held in uniform rows (Rx) and uniform columns (Cx) along a predetermined length, and each reel (112) supporting a wire that is conveyed towards an outlet (110a) of the rack during a method for drawing and transferring wires performed by the system, **characterized in that** the system comprises:
- a mobile structure (114) comprising a frame (114a), a base (114b) and one or more mobile means that allow the mobile structure (114) to be moved along the length of the rack (110), the frame (114a) comprising:
- upper and lower supports (114c) that are substantially parallel and spaced apart by a predetermined distance allowing the loading of the roller panels (116) in correspondence with the wires leaving reels (112) of the rack (110); and
- one or more holding means (114e) that are substantially parallel and spaced apart by a predetermined distance in correspondence with roller panels (116) loaded on the frame, each holding means (114e) comprising a holding and alignment means for guiding the wires passing through from a corresponding roller panel (116) towards one or more installations downstream of the system (100);
- one or more roller panels (116) made up of horizontal and vertical rollers that allow the wires to be organized relative to the reels (112); and
- a fixed structure (120) disposed at the end of the rack (110) and comprising a frame (120a) and a base (120b), the frame (120a) of the fixed structure comprising upper and lower supports (120c) that are substantially parallel and spaced apart by a predetermined distance allowing the transfer of the roller panels (116) from the frame (114a) of the mobile structure (114) towards the fixed structure (120) without loss of alignment of the wires, wherein the mobile structure (114) is positioned next to the fixed structure (120).

2. The system (100) of Claim 1, wherein the frame (114a) of the mobile structure (114) comprises a chassis (114d) in which the roller panels (116) are disposed in a substantially parallel manner, the chassis (114d) comprising a sliding element that is transferable between the upper and lower supports (114c) of the frame (114a) and the upper and lower supports (120c) of the fixed structure (120) that are spaced apart by a predetermined distance corresponding to the parameters of the chassis (114d).

3. The system (100) of Claim 1, wherein the frame (114a) of the mobile structure comprises one or more rails that are substantially parallel and spaced apart by a predetermined distance allowing the loading of the roller panels (116) on the frame (114a).

4. The system (100) of any one of Claims 1 to 3, wherein the holding means (114e) comprises a comb having a support with a predetermined length and an upper surface from which a plurality of sets of teeth extend that are aligned and parallel and that are positioned with a predetermined pitch.

5. The system (100) of any one of Claims 1 to 4, in which the frame (114a) of the mobile structure comprises one or more forks (118) at which wires selected for drawing are deflected during the drawing and transfer method, the forks being fastened to the frame (114a) in an adjustable manner along an elongate member (114a") of the frame depending on the positioning of the roller panels (116).

6. The system (100) of any one of Claims 1 to 5, wherein the mobile means of the mobile structure (114) is selected from one or more wheels (115) provided on at least one of the frame (114a) and the base (114b) of the mobile structure (114), one or more manually guided modules and one or more autonomous modules.

7. A method for drawing and transferring wires selected for incorporation in a reinforced ply performed by the system (100) of any one of Claims 1 to 6 during a calendering cycle, the method comprising the following steps:
- a step of positioning the mobile structure (114) such that it moves in a mobile manner relative to a path substantially parallel to the rack (110), during which the roller panels (116) necessary for placing the selected wires are put in place in the frame (114a);
- a step of capturing the wires selected for incorporation in a reinforced ply, during the capture of the selected wires in the one or more roller panels (116) where they are organized so as to perform their drawing;
- a holding and alignment step performed by the holding means (114e) of the mobile structure (114), during which each selected wire is captured on a corresponding holding means (114e);
- a step of conveying the captured wires towards the outlet (110a) of the rack, during which the mobile means of the mobile structure (114) moves along the path substantially parallel to the rack (110) so as to draw the captured wires;
- a step of drawing the conveyed wires towards the fixed structure (120), during which the movement of the mobile structure (114) ends in order to align the upper and lower supports (114c) of the frame (114a) and the upper and lower supports (120c) of the fixed structure (120); and
- a step of transferring the roller panels (116) from the frame (114a) of the mobile structure (114) towards the fixed structure (120) so as to make it easier to load the roller panels (116) into the fixed structure.

8. The method of Claim 7, wherein the step of capturing the selected wires comprises a step of stopping the mobile structure (114) at one or more columns (Cx) of the rack (110) to capture the selected wires.

9. The method of Claim 7 or Claim 8, wherein the step of positioning the mobile structure (114) comprises a step of aligning the roller panels (116) with a corresponding row (Rx) of the rack (110) from which wires are selected for incorporation in a reinforced ply.

10. A calendering line that performs a calendering cycle to form reinforced plies, comprising the system (100) of any one of Claims 1 to 6.

## Patentansprüche

1. System (100) zum Ziehen und Überführen von in einem oder mehreren Gestellen (110) des Systems angeordneten Drähten, wobei jedes Gestell (110) eine Mehrzahl von Spulen (112) stützt, die in einheitlichen Reihen (R_{X}) und einheitlichen Spalten (C_{X}) entlang einer vorbestimmten Länge gehalten sind, und wobei jede Spule (112) einen Draht stützt, der während eines durch das System durchgeführten Verfahrens zum Ziehen und Überführen von Drähten hin zu einem Auslauf (110a) des Gestells befördert wird, **dadurch gekennzeichnet, dass** das System Folgendes umfasst:
- eine bewegliche Struktur (114), die einen Rahmen (114a), eine Basis (114b) und ein oder mehrere bewegliche Mittel umfasst, die ermöglichen, dass die bewegliche Struktur (114) entlang der Länge des Gestells (110) bewegt wird, wobei der Rahmen (114a) Folgendes umfasst:
- obere und untere Stützen (114c), die im Wesentlichen parallel und um einen vorbestimmten Abstand beabstandet sind, so dass das Bestücken der Walzenplatten (116) entsprechend zu den aus Spulen (112) des Gestells (110) austretenden Drähten ermöglicht wird; und
- ein oder mehrere Haltemittel (114e), die im Wesentlichen parallel und um einen vorbestimmten Abstand entsprechend zu den am Rahmen bestückten Walzenplatten (116) beabstandet sind, wobei jedes Haltemittel (114e) ein Halte- und Ausrichtungsmittel zum Führen der Drähte umfasst, die von einer entsprechenden Walzenplatte (116) hin zu einer oder mehreren Einrichtungen stromabwärts des Systems (100) verlaufen;
- eine oder mehrere aus horizontalen und vertikalen Walzen bestehende Walzenplatten (116), die ein Gliedern der Drähte relativ zu den Spulen (112) ermöglichen; und
- eine feststehende Struktur (120), die am Ende des Gestells (110) angeordnet ist und einen Rahmen (120a) und eine Basis (120b) umfasst, wobei der Rahmen (120a) der feststehenden Struktur obere und untere Stützen (120c) umfasst, die im Wesentlichen parallel und um einen vorbestimmten Abstand beabstandet sind, so dass die Überführung der Walzenplatten (116) vom Rahmen (114a) der beweglichen Struktur (114) hin zur feststehenden Struktur (120) ohne einen Verlust der Ausrichtung der Drähte ermöglicht wird, wobei die bewegliche Struktur (114) neben der feststehenden Struktur (120) positioniert ist.

2. System (100) nach Anspruch 1, wobei der Rahmen (114a) der beweglichen Struktur (114) ein Untergestell (114d) umfasst, in dem die Walzenplatten (116) auf im Wesentlichen parallele Weise angeordnet sind, wobei das Untergestell (114d) ein Gleitelement umfasst, das zwischen den oberen und unteren Stützen (114c) des Rahmens (114a) und den oberen und unteren Stützen (120c) der feststehenden Struktur (120) überführbar ist, die um einen vorbestimmten Abstand entsprechend zu den Parametern des Untergestells (114d) beabstandet sind.

3. System (100) nach Anspruch 1, wobei der Rahmen (114a) der beweglichen Struktur eine oder mehrere Schienen umfasst, die im Wesentlichen parallel und um einen vorbestimmten Abstand beabstandet sind, so dass das Bestücken der Walzenplatten (116) am Rahmen (114a) ermöglicht wird.

4. System (100) nach einem der Ansprüche 1 bis 3, wobei das Haltemittel (114e) einen Kamm umfasst, der eine Stütze mit einer vorbestimmten Länge und eine obere Fläche aufweist, von der sich eine Mehrzahl von Sätzen von Zähnen erstreckt, die ausgerichtet und parallel sind und die mit einer vorbestimmten Teilung positioniert sind.

5. System (100) nach einem der Ansprüche 1 bis 4, wobei der Rahmen (114a) der beweglichen Struktur eine oder mehrere Zinken (118) umfasst, an denen zum Ziehen ausgewählte Drähte während des Zieh- und Überführungsverfahrens umgelenkt werden, wobei die Zinken entlang eines länglichen Elements (114a") des Rahmens auf in Abhängigkeit von der Positionierung der Walzenplatten (116) einstellbare Weise am Rahmen (114a) befestigt sind.

6. System (100) nach einem der Ansprüche 1 bis 5, wobei das bewegliche Mittel der beweglichen Struktur (114) aus einem oder mehreren Rädern (115), die an mindestens einem des Rahmens (114a) und der Basis (114b) der beweglichen Struktur (114) bereitgestellt sind, einem oder mehreren manuell geführten Modulen und einem oder mehreren autonomen Modulen ausgewählt ist.

7. Verfahren zum Ziehen und Überführen von zur Integration in eine verstärkte Lage ausgewählten Drähten, das durch das System (100) nach einem der Ansprüche 1 bis 6 während eines Kalandrierungszyklus durchgeführt wird, wobei das Verfahren die folgenden Schritte umfasst:
- einen Schritt zum Positionieren der beweglichen Struktur (114) derart, dass sie sich auf bewegliche Weise relativ zu einem zum Gestell (110) im Wesentlichen parallelen Pfad bewegt, während welchem die zum Platzieren der ausgewählten Drähte erforderlichen Walzenplatten (116) im Rahmen (114a) platziert werden;
- einen Schritt zum Erfassen der zur Integration in eine verstärkte Lage ausgewählten Drähte, wobei während des Erfassens der ausgewählten Drähte in der einen oder den mehreren Walzenplatten (116) sie dort gegliedert werden, um das Ziehen davon durchzuführen;
- einen Halte- und Ausrichtungsschritt, der durch die Haltemittel (114e) der beweglichen Struktur (114) durchgeführt wird, während welchem jeder ausgewählte Draht auf einem entsprechenden Haltemittel (114e) erfasst wird;
- einen Schritt zum Befördern der erfassten Drähte hin zum Auslauf (110a) des Gestells, während welchem sich das bewegliche Mittel der beweglichen Struktur (114) entlang des zum Gestell (110) im Wesentlichen parallelen Pfads bewegt, um die erfassten Drähte zu ziehen;
- einen Schritt zum Ziehen der beförderten Drähte hin zur feststehenden Struktur (120), während welchem die Bewegung der beweglichen Struktur (114) endet, um die oberen und unteren Stützen (114c) des Rahmens (114a) und die oberen und unteren Stützen (120c) der feststehenden Struktur (120) auszurichten; und
- einen Schritt zum Überführen der Walzenplatten (116) vom Rahmen (114a) der beweglichen Struktur (114) hin zur feststehenden Struktur (120), um ein Bestücken der Walzenplatten (116) in die feststehende Struktur zu vereinfachen.

8. Verfahren nach Anspruch 7, wobei der Schritt zum Erfassen der ausgewählten Drähte einen Schritt zum Anhalten der beweglichen Struktur (114) an einer oder mehreren Spalten (C_{X}) des Gestells (110), um die ausgewählten Drähte zu erfassen, umfasst.

9. Verfahren nach Anspruch 7 oder Anspruch 8, wobei der Schritt zum Positionieren der beweglichen Struktur (114) einen Schritt zum Ausrichten der Walzenplatten (116) mit einer entsprechenden Reihe (R_{X}) des Gestells (110), aus der Drähte zur Integration in eine verstärkte Lage ausgewählt werden, umfasst.

10. Kalandrierungslinie, die einen Kalandrierungszyklus durchführt, um verstärkte Lagen auszubilden, umfassend das System (100) nach einem der Ansprüche 1 bis 6.

## Revendications

1. Un système (100) de tirage et de transfert de fils arrangés dans un ou plusieurs râteliers (110) du système, chaque râtelier (110) supportant une pluralité de bobines (112) maintenues en rangées uniformes (Rx) et en colonnes uniformes (Cx) le long d'une longueur prédéterminée, et chaque bobine (112) supportant un fil qui est acheminé vers une sortie (110a) du râtelier pendant un procédé de tirage et de transfert de fils réalisé par le système, **caractérisé en ce que** le système comprend :
- une structure mobile (114) comprenant un cadre (114a), une base (114b) et un ou des moyens mobiles qui permettent le déplacement de la structure mobile (114) le long de la longueur du râtelier (110), le cadre (114a) comprenant :
- des supports supérieurs et inférieurs (114c) qui sont sensiblement parallèles et espacés par une distance prédéterminée permettant le chargement des panneaux à rouleaux (116) en correspondance avec les fils sortant de bobines (112) du râtelier (110); et
- un ou des moyens de maintien (114e) qui sont sensiblement parallèles et espacés par une distance prédéterminée en correspondance avec des panneaux à rouleaux (116) chargés sur le cadre, chaque moyen de maintien (114e) comprenant un moyen de maintien et d'alignement pour guider les fils traversant d'un panneau à rouleaux (116) correspondant vers une ou des installations en aval du système (100) ;
- un ou plusieurs panneaux à rouleaux (116) constitués de rouleaux horizontaux et verticaux qui permettent l'organisation des fils par rapport aux bobines (112); et
- une structure fixe (120) disposée en bout de râtelier (110) et comprenant un cadre (120a) et une base (120b), le cadre (120a) de la structure fixe comprenant des supports supérieurs et inférieurs (120c) qui sont sensiblement parallèles et espacés par une distance prédéterminée permettant le transfert des panneaux à rouleaux (116) du cadre (114a) de la structure mobile (114) vers la structure fixe (120) sans perte d'alignement des fils où la structure mobile (114) est positionnée à côté de la structure fixe (120).

2. Le système (100) de la revendication 1, dans lequel le cadre (114a) de la structure mobile (114) comprend un châssis (114d) dans lequel les panneaux à rouleaux (116) sont disposés de manière sensiblement parallèle, le châssis (114d) comprenant un élément glissant qui est transférable entre les supports supérieurs et inférieurs (114c) du cadre (114a) et les supports supérieurs et inférieurs (120c) de la structure fixe (120) qui sont espacés par une distance prédéterminée correspondante aux paramètres du châssis (114d).

3. Le système (100) de la revendication 1, dans lequel le cadre (114a) de la structure mobile comprend un ou des rails sensiblement parallèles et espacés par une distance prédéterminée permettant le chargement des panneaux à rouleaux (116) sur le cadre (114a).

4. Le système (100) de l'une quelconque des revendications 1 à 3, dans lequel le moyen de maintien (114e) comprend un peigne ayant un support d'une longueur prédéterminée et une surface supérieure de laquelle une pluralité de dentures s'étend qui sont alignées et parallèles et qui sont positionnées à un pas prédéterminé.

5. Le système (100) de l'une quelconque des revendications 1 à 4, dans lequel le cadre (114a) de la structure mobile comprend une ou des fourchettes (118) auxquelles des fils choisis pour tirage sont renvoyés pendant le procédé de tirage et de transfert, les fourchettes étant fixées au cadre (114a) de manière ajustable le long d'un membre allongé (114a") du cadre en fonction du positionnement des panneaux à rouleaux (116).

6. Le système (100) de l'une quelconque des revendications 1 à 5, dans lequel le moyen mobile de la structure mobile (114) est choisi parmi une ou des roulettes (115) fournies sur au moins un entre le cadre (114a) et la base (114b) de la structure mobile (114), un ou des modules guidés manuellement et un ou des modules autonomes.

7. Un procédé de tirage et de transfert de fils choisis pour incorporation dans une nappe renforcée réalisé par le système (100) de l'une quelconque des revendications 1 à 6 pendant un cycle de calandrage, le procédé comprenant les étapes suivantes :
- une étape de positionnement de la structure mobile (114) de sorte qu'elle se déplace de manière mobile par rapport à un trajet sensiblement parallèle au râtelier (110), pendant laquelle les panneaux à rouleaux (116) nécessaires pour réaliser le placement des fils choisis sont mis en place dans le cadre (114a);
- une étape de prise des fils choisis pour incorporation dans une nappe renforcée, pendant la capture des fils choisis dans le ou les panneaux à rouleaux (116) où ils sont organisés pour réaliser leur tirage ;
- une étape de maintien et d'alignement réalisée par les moyens de maintien (114e) de la structure mobile (114), pendant laquelle chaque fil choisi est accroché sur un moyen de maintien (114e) correspondant ;
- une étape d'acheminement des fils capturés vers la sortie du râtelier (110a), pendant laquelle le moyen mobile de la structure mobile (114) réalise son déplacement le long du trajet sensiblement parallèle au râtelier (110) pour réaliser le tirage des fils capturés ;
- une étape de tirage des fils acheminés vers la structure fixe (120), pendant laquelle le déplacement de la structure mobile (114) termine afin d'aligner les supports supérieurs et inférieurs (114c) du cadre (114a) et les supports supérieurs et inférieurs (120c) de la structure fixe (120) ; et
- une étape de transfert des panneaux à rouleaux (116) du cadre (114a) de la structure mobile (114) vers la structure fixe (120) pour faciliter le chargement des panneaux à rouleaux (116) dans la structure fixe.

8. Le procédé de la revendication 7, dans lequel l'étape de prise des fils choisis comprend une étape d'arrêt de la structure mobile (114) à une ou plusieurs colonnes (Cx) du râtelier (110) pour réaliser la prise de fils choisis.

9. Le procédé de la revendication 7 ou de la revendication 8, dans lequel l'étape de positionnement de la structure mobile (114) comprend une étape d'alignement des panneaux à rouleaux (116) avec une rangée (Rx) correspondante du râtelier (110) de laquelle des fils sont choisis pour incorporation dans une nappe renforcée.

10. Une ligne de calandrage qui réalise un cycle de calandrage pour former des nappes renforcées, comprenant le système (100) de l'une quelconques des revendications 1 à 6.
